# EUROPÄISCHE PATENTSCHRIFT

(11) **EP 0 840 832 B1**
(45) Veröffentlichungstag und Bekanntmachung des Hinweises auf die Patenterteilung: **03.04.2002**
(21) Anmeldenummer: 96922880.8
(22) Anmeldetag: 21.06.1996
(51) Int. Cl.: E05B 49/00, B60R 25/04

(54) **DIEBSTAHLSCHUTZSYSTEM FÜR EIN KRAFTFAHRZEUG**
VEHICLE ANTI-THEFT SYSTEM
SYSTEME ANTIVOL POUR UN VEHICULE

(30) Priorität: 24.07.1995 EP 95111629
(43) Veröffentlichungstag der Anmeldung: 13.05.1998
(73) Patentinhaber: SIEMENS AKTIENGESELLSCHAFT, 80333 München (DE)
(72) Erfinder: ZIMMER, Herbert, D-93049 Regensburg (DE)
(86) Internationale Anmeldenummer: EP9602712
(87) Internationale Veröffentlichungsnummer: WO9704201

(56) Entgegenhaltungen:
- EP-A- 0 568 398
- WO-A-93/23908
- DE-A- 4 317 119
- US-A- 4 918 955
- US-A- 5 287 112
- ELECTRONIC DESIGN, Bd. 41, Nr. 25, 2.Dezember 1993, HASBROUCK HEIGHTS, NEW JERSEY US, Seiten 35-36, XP000423195 MILT LEONARD: "rf transponder embedded in auto ignition keys stymies car thieves"

## Beschreibung

Die Erfindung betrifft ein Diebstahlschutzsystem für ein Kraftfahrzeug. Sie betrifft insbesondere ein Schließsystem durch das eine Wegfahrsperre des Kraftfahrzeugs freigegeben wird.

Ein bekanntes Diebstahlschutzsystem (US 5,053,774) weist einen tragbaren Transponder auf, der ein Fragecodesignal von einem stationären Tranceiver empfängt. Nach Empfang des Fragecodesignals wird ein Antwortcodesignal an den Tranceiver zurückgeschickt. Im dem Fragecodesignal wird Energie mit übertragen, durch die das Antwortcodesignal ausgelöst wird. Die Energie wird vorübergehend in einem Akkumulator gespeichert. Wenn genügend Energie in dem Akkumulator vorhanden ist, so wird das Codesignal ausgelöst.

Wenn der Transponder und der Transceiver schlecht miteinander gekoppelt sind, so kann es unter Umständen sehr lange dauern, bis der Akkumulator geladen ist.

Das Problem der Erfindung ist es, ein Diebstahlschutzsystem für ein Kraftfahrzeug zu schaffen, durch das ein Energiespeicher im Transponder sicher und schnell aufgeladen wird, damit unverzüglich nach Erhalt eine Fragecodesignals ein Antwortcodesignal (im folgenden als Codesignal bezeichnet) ausgesendet werden kann.

Das Problem wird erfindungsgemäß durch die Merkmale von Patentanspruch 1 gelöst. Dabei wird durch Variieren der Erregerfrequenz des Fragecodesignals eine sichere Kopplung zwischen Transponder und Tranceiver erreicht.

Vorteilhafte Ausgestaltungen der Erfindung sind in den Unteransprüchen gekennzeichnet.

Ausführungsbeispiele der Erfindung ist anhand der schematischen Zeichnungen näher erläutert. Es zeigen:
- Figur 1:: ein schematisches Blockschaltbild des erfindungsgemäßen Diebstahlschutzsystems,
- Figur 2a bis 2e:: Impulsdiagramme eines Transponders und eines Transceivers des Diebstahlschutzsystems,
- Figur 3:: eine Resonanzkurve eines Schwingkreises,
- Figur 4:: ein Blockschaltbild eines ersten Ausführungsbeispiels zum Erzeugen einer Schwingung und
- Figur 5:: ein Blockschaltbild eines zweiten Ausführungsbeispiels.

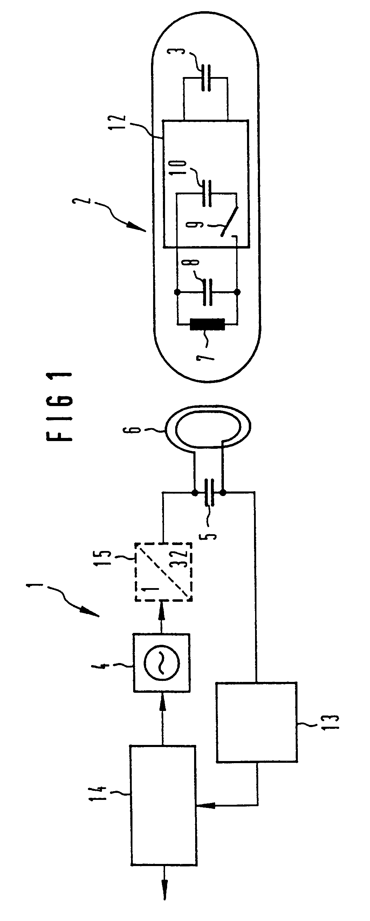

Ein erfindungsgemäßes Diebstahlschutzsystem weist einen im Kraftfahrzeug angeordneten Transceiver 1 (Figur 1) auf, der mit einem tragbaren Transponder 2 über eine transformatorische Kopplung zusammenwirkt, wenn sich der Transponder 2 in der Nähe des Transceivers 1 befindet. Der Transceiver 1 erzeugt ein Wechselfeld, durch das Energie zu dem Transponder 2 übertragen wird, wodurch dann ein Kondensator (Ladekondensator 3) oder Akkumulator im Transponder 2 aufgeladen wird. Wenn genügend Energie in dem Ladekondensator 3 geladen ist, wird der Transponder 2 aktiviert und Codesignale zurück zu dem Transceiver 1 übertragen.

Zur Energieübertragung und Datenrückübertragung weist der Transceiver 1 einen Schwingkreis auf (im folgenden als Antennenschwingkreis bezeichnet), der mit Hilfe eines Oszillators 4 zum Schwingen angeregt wird. Der Antennenschwingkreis weist hierzu zumindest einen Antennenkondensator 5 und eine Spule (Antenne 6) auf. Die Antenne 6 kann beispielsweise um das Zündschloß gewickelt sein.

Der Transponder 2 weist ebenfalls einen Schwingkreis (im folgenden als Transponderschwingkreis bezeichnet) mit einer Spule 7 und einem Transponderkondensator 8 auf. Wenn sich die Antenne 6 und die Spule 7 in unmittelbarer Nähe zueinander befinden, so findet eine induktive Kopplung und somit eine Daten- oder Energieübertragung statt. Dies ist beispielsweise dann der Fall, wenn der Transponder 2 auf einem Zündschlüssel angeordnet ist. Sobald der Zündschlüssel in das Zündschloß gesteckt und der Zündschlüssel verdreht wird, sind die Antenne 6 und die Spule 7 miteinander elektrisch gekoppelt.

Die Schwingung des Antennenschwingkreises 5, 6 wird durch den Transponder 2 im Takte einer Codeinformation moduliert. Hierzu weist der Transponder 2 einen Schalter 9 auf, der im Takte der Codeinformation einen Zusatzkondensator 10 zu dem Transponderkondensator 8 des Transponderschwingkreises 7, 8 hinzuschaltet. Die Modulation findet jedoch erst dann statt, wenn der Ladekondensator 3 hinreichend mit Energie geladen ist, um den Schalter 9 im Takte der Codeinformation zu schalten.

Der Schalter 9 wird dabei von einer Transponder-Steuereinheit (Transponder-IC 12) gesteuert, die als integrierter Schaltkreis ausgebildet sein kann.

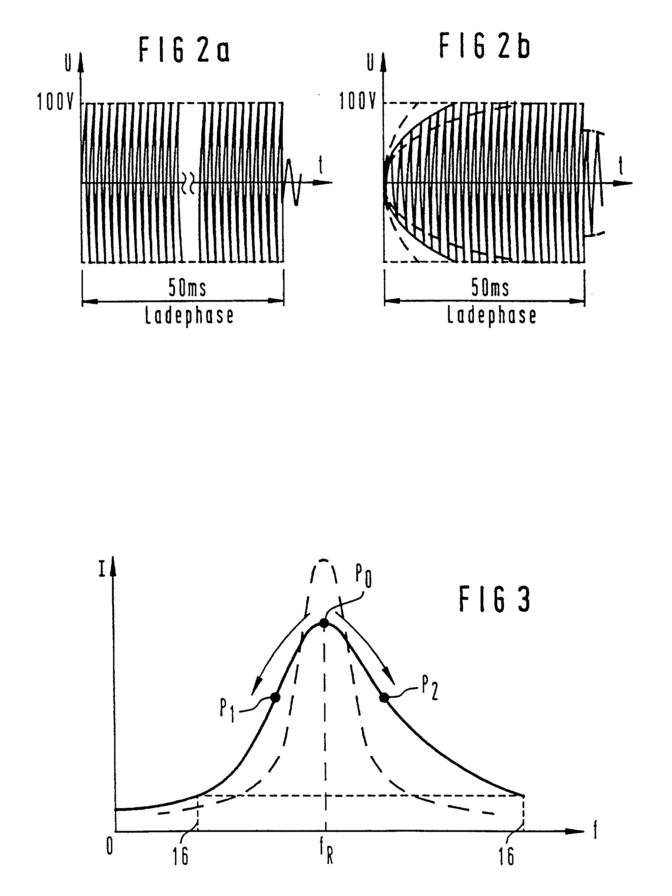

Sobald der Zündschlüssel im Zündschloß verdreht wird, erzeugt der Transceiver 1 ein Wechselfeld mit einer großen Feldstärke (Energiesignale) (Figur 2a). Innerhalb einer vorbestimmten Zeitdauer (Ladephase) werden die Energiesignale erzeugt, hier beispielsweise 50 ms lang. Sie haben eine Amplitude von etwa 100 V. Je nach Güte der Kopplung zwischen Transponder 2 und Transceiver 1, d.h. je nach empfangener Feldstärke, laden diese Energiesignale den Ladekondensator 3 unterschiedlich schnell auf (Figur 2b).

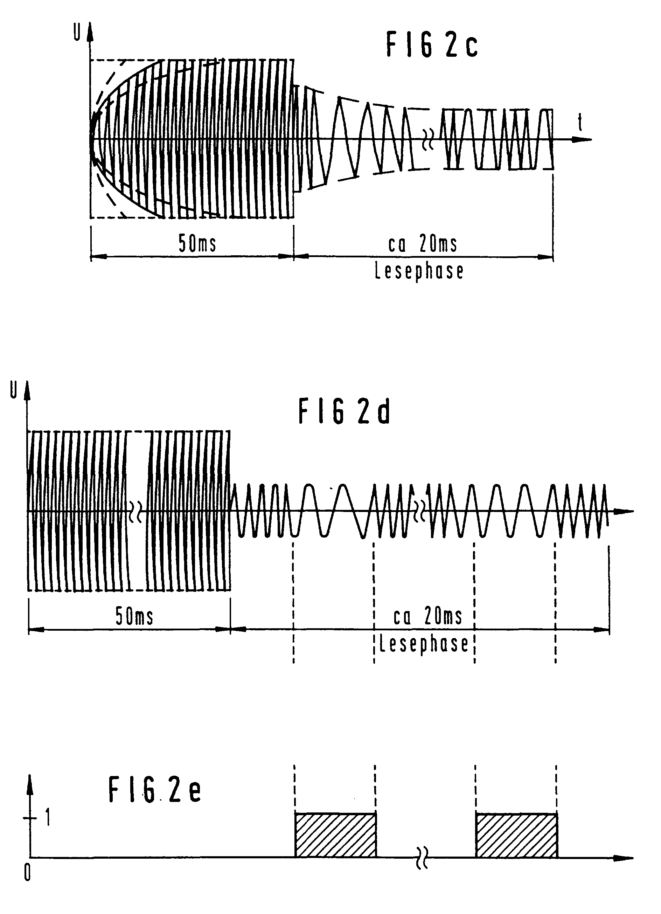

Wenn das Aussenden der Energiesignale beendet ist, sollte der Ladekondensator 3 weitgehend geladen sein. Der Transponder 2 erkennt das Abschalten der Energiesignale, da der Transceiver 1 danach ein Wechselfeld mit nur geringer Feldstärke (in der Größenordnung von einigen mV) erzeugt. Daraufhin wird der Schalter 9 innerhalb einer weiteren vorbestimmten Zeitdauer (Lesephase) im Takte der Codeinformation geschaltet und erzeugt somit das Codesignal (Figur 2c). Das Codesignal ist ein Signal mit einer geringen Amplitude, beispielsweise von etwa 1 mV, und steht etwa 20 ms lang an. Die Amplitude des Codesignals nimmt ständig ab, da der Ladekondensator 3 die Energie zum Schalten des Schalters liefert und infolgedessen stetig entladen wird.

Das Codesignal wirkt auf den Antennenschwingkreis 5, 6 zurück, da die Antenne 6 und die Spule 7 induktiv miteinander gekoppelt sind. Daher wird die Schwingung des Antennenschwingkreises 5, 6 moduliert (Figur 2d). Da der Zusatzkondensator 10 zu dem Transponderkondensator 8 hinzu- und weggeschaltet wird, wird der Antennenschwingkreis 5, 6 unterschiedlich belastet und infolgedessen wird die Schwingung des Antennenschwingkreises 5, 6 in ihrer Frequenz moduliert.

Bei einer angenommenen mittleren Erregerfrequenz f_{E} von 129 kHz, bei der der Antennenschwingkreis 5, 6 angeregt wird, ändert sich die Schwingungsfrequenz des Antennenschwingkreises 5, 6 beispielsweise von 123 kHz bis 134 kHz infolge der Frequenzmodulation durch das Codesignal.

Die modulierte Schwingung des Antennenschwingkreises 5, 6 wird von einem Demodulator 13 erfaßt und in einer Steuer- und Auswerteeinheit 14 ausgewertet. Hierzu werden die Periodendauern oder die Frequenzen der modulierten Schwingung gemessen. Wenn die Frequenz der modulierten Schwingung unter einem Schwellwert von beispielsweise 129 kHz liegt, so wird ein High-Pegel des modulierten Signals erkannt und wenn die Frequenz über 129 kHz liegt, so wird ein Low-Pegel erkannt (Figur 2e). Auf diese Weise wird die Codeinformation des Transponders 2 aus der modulierten Schwingung demoduliert.

Die Codeinformation wird in der Steuer- oder Auswerteeinheit 14 mit einer vorgegebenen Sollcodeinformation verglichen. Bei Übereinstimmung der beiden wird ein Freigabesignal an ein Sicherheitsaggregat im Kraftfahrzeug gesendet.

Ein solches Sicherheitsaggregat kann beispielsweise ein Türschloß oder eine Wegfahrsperre sein. Bei berechtigtem und korrektem Codesignal wird das Türschloß entriegelt oder die Wegfahrsperre deaktiviert, so daß ein Starten des Motors möglich ist.

Der Antennenschwingkreis 5, 6 wird durch den Oszillator 4 mit einer Erregergröße zu einer Schwingung mit einer Erregerfrequenz f_{E} gezwungen. Als Erregergröße kann die Ausgangsspannung oder -strom des Oszillators 4 verwendet werden. Der Oszillator 4 schwingt mit der Oszillatorfrequenz f₀. Zwischen dem Oszillator 4 und dem Antennenschwingkreis 5, 6 kann zusätzlich noch ein Frequenzteiler 15 angeordnet sein, der die Oszillatorfrequenz f₀ auf die gewünschte Erregerfrequenz f_{E} herunterteilt.

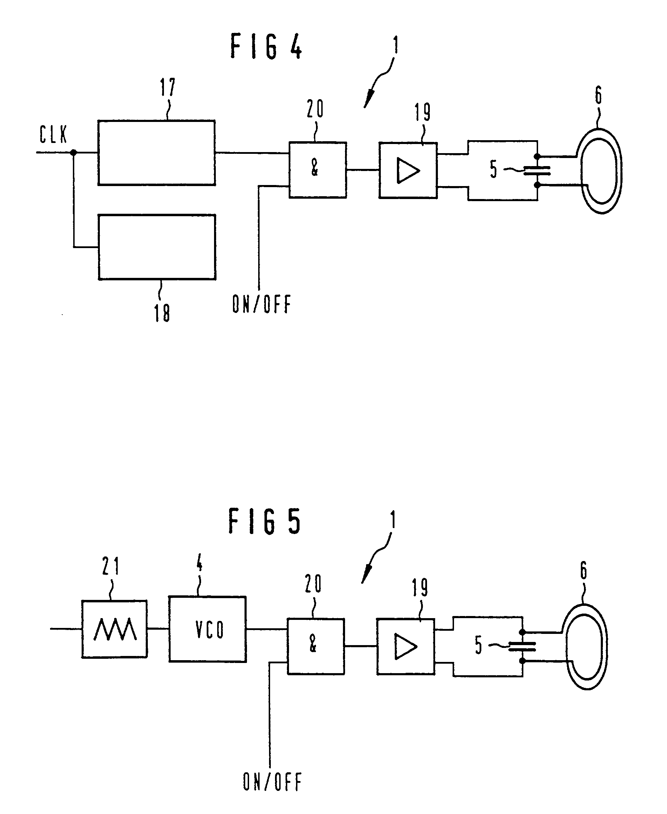

Durch die Erregergröße entsteht eine stationäre erzwungene Schwingung des Antennenschwingkreises 5, 6, der dann mit der Erregerfrequenz f_{E} schwingt. Jeder Schwingkreis besitzt eine Eigenfrequenz oder auch Resonanzfrequenz f_{R} genannt, die durch die Bauelemente des Schwingkreises, d.h. im wesentlichen durch die Antenne 6 und den Antennenkondensator 5, bestimmt wird. Die erzeugte Intensität (Feldstärke/Amplitude) der Schwingung ist am größten, wenn der Schwingkreis mit der Erregerfrequenz f_{E} gleich der Resonanzfrequenz f_{R} erregt wird (der Arbeitspunkt Pᵢ des Schwingkreises befindet sich dann im Resonanzpunkt P₀; siehe hierzu Figur 3). In diesem Fall wird die meiste Energie zum Transponder 2 übertragen, so daß der Ladekondensator 3 schnell geladen werden kann.

Die Leistungsbilanz wird anhand einer Resonanzkurve (Figur 3) verdeutlicht, bei der die Frequenz f auf der Abszisse (x-Achse) und die Schwingungsintensität I infolge der Erregergröße, d.h. Amplitude der Erregerspannung oder des Erregerstroms, auf der Ordinate (y-Achse) aufgetragen sind. Weicht die Erregerfrequenz f_{E} (Arbeitspunkt Pᵢ) von der Resonanzfrequenz f_{R} ab, so wird die Intensität I der Schwingung kleiner und es wird weniger Energie zum Transponder 2 übertragen. Der Arbeitspunkt P₀ wird dann eingenommen, wenn Erregerfrequenz f_{E} = Resonanzfrequenz f_{R} ist. Je nach Differenz zwischen den beiden Frequenzen befinden sich der Arbeitspunkt bei kleineren Intensitäten I (siehe Arbeitspunkt P₁ oder P₂).

Liegt der Arbeitspunkt unterhalb einer im voraus ermittelten Leistungsgrenze 16, kommt zu wenig Feldenergie bei dem Transponder 2 an. Daher kann aufgrund zu gering übertragener Energie der Ladekondensator 3 nicht mehr so schnell oder nicht genügend geladen werden. Der Transponder 2 moduliert dann den Antennenschwingkreis 5, 6 nicht mehr oder bricht die Modulation zwischendurch ab.

Beim Entwurf eines solchen Diebstahlschutzsystems wird zwar darauf geachtet, daß die Erregerfrequenz f_{E} weitgehend mit der Resonanzfrequenz f_{R} übereinstimmt. Aufgrund von Bauteiletoleranzen sowohl im Transceiver 1 als auch im Transponder 2 können jedoch die Resonanzfrequenz f_{R} und die Erregerfrequenz f_{E} voneinander abweichen, so daß keine optimale Energieübertragung auf den Transponder 2 stattfindet. Bereits bei kleinen Abweichungen der beiden Frequenzen voneinander können bei hoher Güte der Schwingkreise (schmale Gütekurve in der Figur 3 gestrichelt gezeichnet) eine beträchtliche Abnahme in der Intensität (Feldstärke) des übertragenen Wechselfeldes stattfinden.

Eine optimale Leistungsbilanz wäre dann gegeben, wenn die Bauelemente der Schwingkreise und des Oszillators 4 derart ausgesucht wären, daß sie nur geringe Abweichungen von den Sollwerten haben und folglich dann immer die gleichen Verhältnisse herrschen. Hierzu muß jedoch ein sehr hoher Aufwand betrieben werden. Auch äußere Einflüsse, wie Temperaturschwankungen, können Einfluß auf die Bauelemente haben, so daß sich die Verhältnisse schnell ändern. So kann es eben vorkommen, daß nicht die maximale Energie übertragen wird.

Damit der Ladekondensator 3 immer sicher und vollständig geladen wird, wird erfindungsgemäß vorgesehen, daß die Erregerfrequenz f_{E} zumindest in der Ladephase variiert wird. Sobald der Transponder 2 mit dem Zündschlüssel im Zündschloß verdreht wird, wird die Energie des Oszillators 4 eingeschaltet. Der Oszillator 4 beginnt bei einer vorgegebenen Frequenz f₀ zu schwingen. Die Erregerfrequenz f_{E}, die gleich der Oszillatorfrequenz f₀ sein kann, wird innerhalb Ladephase in einem vorgegebenen Frequenzbereich verändert. Dies reicht aus, damit der Arbeitspunkt der maximalen Energieübertragung (vgl. Figur 3) zumindest einmal annähernd erreicht wird, um den Ladekondensator 3 ausreichend aufzuladen.

Die Erregerfrequenz f_{E} kann dabei in vorgegebenen Schritten innerhalb des vorbestimmten Frequenzbereichs verändert werden. Beispielsweise kann die Erregerfrequenz f_{E} von 129 kHz ± 3% (wobei der vorbestimmte Frequenzbereich 129 kHz ± 3% beträgt) in Stufen von 500 Hz verändert werden.

Die Erregerfrequenz f_{E} kann auch kontinuierlich innerhalb des vorbestimmten Frequenzbereichs verändert werden.

Zusätzlich ist es möglich, die Resonanzfrequenz f_{R} des Antennenschwingkreises 5, 6 bei jeder Erregerfrequenz f_{E} in vorgegebenen Schritten zu ändern. Hierzu können bei jeder Erregerfrequenz f_{E} verschiedene Impedanzen dem Antennenschwingkreis 5, 6 hinzu- oder weggeschaltet werden, wodurch die Resonanzfrequenz f_{R} in bezug auf die Erregerfrequenz f_{E} verändert wird.

Eine Schaltungsanordnung zum Verändern der Erregerfrequenz f_{E} in vorgegebenen Schritten ist in der Figur 4 dargestellt. Dabei wird ein Treiber 17 von einer Taktfrequenz CLK getaktet betrieben. Eine Frequenzabfolgesteuereinheit 18 gibt die Frequenzschritte vor, mit der der programmierbare Treiber 18 betrieben werden soll. Sobald der Zündschlüssel im Zündschloß gedreht wird, d.h. sobald die Energiezufuhr eingeschaltet wird (vgl. ON/OFF-Signal, das über ein UND-Gatter 20 geleitet, in den Figuren 4 und 5), wird der Antennenschwingkreis 5, 6 über einen Verstärker 19 mit der vorgegebenen Erregerfrequenz f_{E} erregt.

Die Erregerfrequenz f_{E} kann auch kontinuierlich mit Hilfe eines spannungsgesteuerten Oszillators 4 (VCO) verändert werden (Figur 5). Hierzu wird ein geeignetes Steuersignal (Sägezahnspannung eines Sägezahngenerators 21) an den Eingang des Oszillators 4 gelegt.

Der Antennenschwingkreis 5, 6 ist in den Ausführungsbeispielen - bedingt durch seine Bauelemente - derart ausgelegt, daß seine Resonanzfrequenz f_{R} etwa 129 kHz beträgt. Die Oszillatorfrequenz f₀ kann beispielsweise etwa 4 MHz betragen. Um den Oszillator 4 auch zum Erregen des Schwingkreises zu verwenden, wird ein 1/32-Frequenzteiler 15 zwischen dem Oszillator 4 und dem Antennenschwingkreis 5, 6 angeordnet. Daraus resultiert eine Erregerfrequenz f_{E} von etwa 129 kHz.

Durch Verändern der Oszillatorfrequenz f₀ um einen vorgegebenen Wert kann die Erregerfrequenz f_{E} geändert werden, damit zumindest einmal ein Arbeitspunkt erreicht wird, bei dem annähernd maximale Energie übertragen wird. Hierdurch wird demzufolge erreicht, daß genügend Energie zum Transponder 2 übertragen wird und der Ladekondensator 3 sicher und schnell aufgeladen wird.

Statt eines festen Frequenzteilers 15 kann auch ein digitaler Frequenzteiler verwendet werden, der die Oszillatorfrequenz f₀ auf die Erregerfrequenz f_{E} teilt. Ein solcher digitaler Frequenzteiler hat ein stufenlos einstellbares Teilerverhältnis.

Die Steuer- oder Auswerteeinheit 14 kann durch einen Mikroprozessor oder durch eine funktionell gleichwertige Schaltungsanordnung realisiert werden. Daher kann die Funktion des Demodulators 13 auch durch den Mikroprozessor übernommen werden. Die Sollcodeinformation mit der die vom Transponder 2 gelieferte Codeinformation verglichen wird, ist in einem nicht dargestellten Speicher (ROM, EEPROM) gespeichert.

Die Codeinformation kann in dem Transponder 2 ebenfalls in solchen Speichern gespeichert sein.

Es kann auch vorgesehen sein, daß sich die Erregerfrequenz f_{E} innerhalb der Ladephase ständig ändert, aber der Frequenzbereich dabei nicht vorgegeben ist, sondern daß sich die Erregerfrequenz f_{E} solange ändert, bis die vorbestimmte Zeitdauer der Ladephase beendet ist. Es wird also kein fester Frequenzbereich durchfahren, sondern nur eine Zeitdauer lang die Frequenz geändert.

In den Ausführungsbeispielen dauert die Ladephase etwa 50 ms. Innerhalb dieser Zeitdauer ändert sich erfindungsgemäß die Erregerfrequenz f_{E} und innerhalb dieser Zeitdauer wird der Ladekondensator 3 induktiv von dem Transceiver 1 geladen.

Die Erregerfrequenz f_{E} kann auch mehrfach den vorbestimmten Frequenzbereich durchfahren, so daß mehrmals ein Arbeitspunkt mit maximaler Schwingungsintensität I erreicht wird. Der vorbestimmte Frequenzbereich und die Zeitdauer, wie lange das Energiesignal zu dem Transponder 2 gesendet wird, hängt von der Größe des Ladekondensators 3 und der im Transponder 2 benötigten Energie ab.

Der Schalter 9 kann auch durch einen integrierten Schaltkreis realisiert werden, in dem auch der Zusatzkondensator 10 enthalten ist. Der Schalter 9 und der Zusatzkondensator 10 können auch in dem Transponder-IC 12 enthalten sein. Statt des Zusatzkondensators 10 kann auch eine Induktivität hinzugeschaltet werden. Für die Erfindung ist jedoch nur wesentlich, daß der Transponderschwingkreis 7, 8 abhängig von der Codeinformation verändert wird und dadurch die Schwingung des Antennenschwingkreises 5, 6 moduliert wird. Es kann dabei eine Frequenz-, Amplituden oder Impulsweitenmodulation verwendet werden.

## Patentansprüche

1. Diebstahlschutzsystem, insbesondere für ein Kraftfahrzeug, mit
- einer stationär angeordneten Einheit (1), die eine Antenne (6) aufweist, die Teil eines ersten Schwingkreises (5, 6) ist,
- einer tragbaren Einheit (2), die eine Spule (7) aufweist, die Teil eines zweiten Schwingkreises (7, 8) ist, der mit einem Energiespeicher (3) verbunden ist, und
- einem Oszillator (4), der mit einer Oszillatorfrequenz (f₀) schwingt und dessen Ausgangsgröße als Erregergröße mit einer Erregerfrequenz (f_{E}) zum Erzwingen einer Schwingung des ersten Schwingkreises (5, 6) verwendet wird, **dadurch gekennzeichnet, daß** die Erregerfrequenz (f_{E}) für eine erste, vorbestimmte Zeitdauer innerhalb eines vorbestimmten Frequenzbereichs verändert wird, sobald eine Energieversorgung der stationär angeordneten Einheit (1) eingeschaltet wird, um Energiesignale von der Antenne (6) zu der Spule (7) induktiv zu übertragen, wodurch der Energiespeicher (3) der tragbaren Einheit (2) zumindest teilweise aufgeladen wird.

2. Diebstahlschutzsystem nach Anspruch 1, **dadurch gekennzeichnet, daß**
- die stationär angeordnete Einheit ein im Kraftfahrzeug angeordneter Transceiver (1) ist,
- die tragbare Einheit ein tragbarer Transponder (2) ist, der eine Codeinformation trägt, wobei der Transponder (2) innerhalb einer zweiten, vorbestimmten Zeitdauer die Schwingung des Schwingkreises (5, 6) in Abhängigkeit seiner Codeinformation moduliert, sobald der Energiespeicher zumindest teilweise aufgeladen ist, damit er den Transponder (2) mit Energie versorgen kann, und
- einer Auswerteeinheit (14), der die Schwingung des Schwingkreises (5, 6) zugeführt wird,
- wobei die modulierte Schwingung durch die Auswerteeinheit (14) erfaßt, die Codeinformation daraus demoduliert, in einem Komparator (14) mit einer Sollcodeinformation verglichen wird und bei Übereinstimmung ein Freigabesignal an ein Sicherheitsaggregat gesendet wird.

3. Diebstahlschutzsystem nach Anspruch 1,
**dadurch gekennzeichnet, daß**
die Erregerfrequenz (f_{E}) in vorgegebenen Schritten innerhalb des vorbestimmten Frequenzbereichs verändert wird.

4. Diebstahlschutzsystem nach Anspruch 1,
**dadurch gekennzeichnet, daß**
die Erregerfrequenz (f_{E}) kontinuierlich innerhalb des vorbestimmten Frequenzbereichs verändert wird.

5. Diebstahlschutzsystem nach Anspruch 2,
**dadurch gekennzeichnet, daß**
die Resonanzfrequenz (f_{R}) des Schwingkreises (5, 6) des Transceivers (1) bei jeder Erregerfrequenz (f_{E}) in vorgegebenen Schritten verändert wird.

6. Diebstahlschutzsystem nach Anspruch 1,
**dadurch gekennzeichnet, daß**
die Erregerfrequenz (f_{E}) durch einen einstellbaren Frequenzteiler (15) verändert wird.

7. Diebstahlschutzsystem nach Anspruch 3,
**dadurch gekennzeichnet, daß**
die Erregerfrequenz (f_{E}) durch den Oszillator (4) geändert wird, dessen Ausgangsgröße von einer variablen Steuergröße eines Generators (21) abhängig ist.

8. Diebstahlschutzsystem nach Anspruch 1,
**dadurch gekennzeichnet, daß**
der Transponder (2) auf einem Zündschlüssel angeordnet ist und der Zündschlüssel durch Drehen im Zündschloß die Energiezufuhr für den Transceiver (1).

9. Diebstahlschutzsystem nach Anspruch 1,
**dadurch gekennzeichnet, daß**
die Erregerfrequenz (f_{E}) nur innerhalb einer vorbestimmten Zeitdauer nach Einschalten der Energiezufuhr geändert wird.

10. Diebstahlschutzsystem nach Anspruch 1,
**dadurch gekennzeichnet, daß**
der Transponder (2) über eine Spule (7) mit der Antenne (6) induktiv gekoppelt ist.

11. Diebstahlschutzsystem nach Anspruch 1,
**dadurch gekennzeichnet, daß**
das Sicherheitsaggregat ein Türschloß oder eine Wegfahrsperre ist.

## Claims

1. Antitheft system, in particular for a motor vehicle, having
- a unit (1) which is arranged in a stationary fashion and which has an antenna (6) which is part of a first oscillating circuit (5, 6),
- a portable unit (2) which has a coil (7) which is part of a second oscillating circuit (7, 8) which is connected to an energy accumulator (3), and
- an oscillator (4) which oscillates with an oscillator frequency (f₀) and whose output variable is used as exciting variable with an exciting frequency (f_{E}) to cause an oscillation of the first oscillating circuit (5, 6), **characterized in that** the exciting frequency (f_{E}) is changed for a first, predetermined period of time within a predetermined frequency range as soon as an energy supply of the unit (1) which is arranged in a stationary fashion is switched on, in order to transmit energy signals inductively from the antenna (6) to the coil (7), as a result of which the energy accumulator (3) of the portable unit (2) is at least partially charged.

2. Antitheft system according to Claim 1, **characterized in that**
- the unit which is arranged in a stationary fashion is a transceiver (1) arranged in the motor vehicle,
- the portable unit is a portable transponder (2) which has an item of code information, the transponder (2) modulating the oscillation of the oscillating circuit (5, 6) within a second, predetermined period of time as a function of the code information of said oscillating circuit (5, 6) as soon as the energy accumulator is at least partially charged, so that it can supply the transponder (2) with energy, and
- an evaluation unit (14) to which the oscillation of the oscillating circuit (5, 6) is fed,
- the modulated oscillation being sensed by the evaluation unit (14), the code information being demodulated therefrom and being compared with an item of reference code information in a comparator (14) and when there is correspondence an enable signal is transmitted to a security assembly.

3. Antitheft system according to Claim 1, **characterized in that** the exciting frequency (f_{E}) is changed within the predetermined frequency range in prescribed increments.

4. Antitheft system according to Claim 1, **characterized in that** the exciting frequency (f_{E}) is changed continuously within the predetermined frequency range.

5. Antitheft system according to Claim 2, **characterized in that** the resonant frequency (f_{R}) of the oscillating circuit (5, 6) of the transceiver (1) is changed at every exciting frequency (f_{E}) in prescribed increments.

6. Antitheft protection system according to Claim 1, **characterized in that** the exciting frequency (f_{E}) is changed by means of an adjustable frequency divider (15).

7. Antitheft system according to Claim 3, **characterized in that** the exciting frequency (f_{E}) is changed by the oscillator (4), whose output variable is dependent on a variable control parameter of a generator (21).

8. Antitheft system according to Claim 1, **characterized in that** the transponder (2) is arranged on an ignition key, and by turning in the ignition lock the ignition key activates the energy supply for the transceiver (1).

9. Antitheft system according to Claim 1, **characterized in that** the exciting frequency (f_{E}) is changed only within a predetermined period of time after the energy supply is switched on.

10. Antitheft system according to Claim 1, **characterized in that** the transponder (2) is inductively coupled to the antenna (6) via a coil (7).

11. Antitheft system according to Claim 1, **characterized in that** the security assembly is a door lock or an immobilizer.

## Revendications

1. Système antivol, notamment pour un véhicule automobile, comportant
- une unité (1) stationnaire qui comporte une antenne (6) qui fait partie d'un premier circuit oscillant (5, 6),
- une unité (2) portable qui comporte une bobine (7) qui fait partie d'un deuxième circuit oscillant (7, 8) qui est relié à un accumulateur d'énergie (3), et
- un oscillateur (4) qui oscille avec une fréquence d'oscillateur (f₀) et dont la grandeur de sortie est utilisée comme grandeur d'excitation avec une fréquence d'excitation (f_{E}) pour imposer une oscillation du premier circuit oscillant (5, 6), **caractérisé par le fait que** la fréquence d'excitation (f_{E}) est modifiée pour une première durée prédéterminée à l'intérieur d'une plage de fréquences prédéterminée dès qu'une alimentation en énergie de l'unité stationnaire (1) est branchée afin de transmettre par induction des signaux d'énergie de l'antenne (6) à la bobine (7), ce qui fait que l'accumulateur d'énergie (3) de l'unité portable (2) est au moins partiellement chargé.

2. Système antivol selon la revendication 1, **caractérisé par le fait que**
- l'unité stationnaire est un récepteur-émetteur (1) placé dans le véhicule automobile,
- l'unité portable est un transpondeur portable (2) qui porte une information codée, le transpondeur (2) modulant à l'intérieur d'une deuxième durée prédéterminée l'oscillation du circuit oscillant (5, 6) en fonction de son information codée dès que l'accumulateur d'énergie est au moins partiellement chargé pour qu'il puisse alimenter en énergie le transpondeur (2), et
- il est prévu une unité d'évaluation (14) à laquelle est envoyée l'oscillation du circuit oscillant (5, 6),
- l'oscillation modulée étant détectée par l'unité d'évaluation (14), l'information codée étant démodulée à partir de là et comparée dans un comparateur (14) à une information codée de consigne et, en cas de coïncidence, un signal de libération étant envoyé à un module de sécurité.

3. Système antivol selon la revendication 1,
**caractérisé par le fait que** la fréquence d'excitation (f_{E}) est modifiée par pas prédéterminés à l'intérieur de la plage de fréquences prédéterminée.

4. Système antivol selon la revendication 1,
**caractérisé par le fait que** la fréquence d'excitation (f_{E}) est modifiée de façon continue à l'intérieur de la plage de fréquences prédéterminée.

5. Système antivol selon la revendication 2,
**caractérisé par le fait que** la fréquence de résonance (f_{R}) du circuit oscillant (5, 6) du récepteur-émetteur (1) est modifiée par pas prédéterminés à chaque fréquence d'excitation (f_{E}).

6. Système antivol selon la revendication 1,
**caractérisé par le fait que** la fréquence d'excitation (f_{E}) est modifiée par un diviseur de fréquence (15) réglable.

7. Système antivol selon la revendication 3,
**caractérisé par le fait que** la fréquence d'excitation (f_{E}) est modifiée par un oscillateur (4) dont la grandeur de sortie dépend d'une grandeur de commande variable d'un générateur (21).

8. Système antivol selon la revendication 1,
**caractérisé par le fait que** le transpondeur (2) est placé sur une clé de contact et la clé de contact déclenche par une rotation dans la serrure de contact l'alimentation en énergie pour le récepteur-émetteur (1).

9. Système antivol selon la revendication 1,
**caractérisé par le fait que** la fréquence d'excitation (f_{E}) est modifiée seulement pendant une durée prédéterminée après le branchement de l'alimentation en énergie.

10. Système antivol selon la revendication 1,
**caractérisé par le fait que** le transpondeur (2) est couplé par induction à l'antenne (6) par l'intermédiaire d'une bobine (7).

11. Système antivol selon la revendication 1,
**caractérisé par le fait que** le module de sécurité est un verrou de porte ou un dispositif d'immobilisation.
